# EUROPEAN PATENT APPLICATION

(11) **EP 4 566 448 A1**
(43) Date of publication of application: **11.06.2025**
(21) Application number: 23214911.2
(22) Date of filing: 07.12.2023
(51) Int. Cl.: A01N 25/30

(54) **SURFACTANT COMBINATION**

(71) Applicant: BASF SE, 67056 Ludwigshafen am Rhein (DE)
(72) Inventor: GHAYOUR, Amir Hossein, Wyandotte, Michigan 48192 (US); LYON, Matthew Gerard, Wyandotte, Michigan 48192 (US)
(74) Representative: Meissner Bolte Partnerschaft mbB

(57) **Abstract**

The present invention relates to surfactant combinations comprising
a) an anionic component A, hereinafter surfactant component A, which is selected from sodium C₁₀-C₁₄ alkyl benzenesulfonates, such as linear sodium dodecylbenzene sulfonate, and
b) a nonionic component B, hereinafter surfactant component B, which is selected from compounds of the formula (I) and mixtures thereof

R-O-(CH₂CH₂-O)ₙ-H (I)

wherein
R
is branched C₈-C₁₀ alkyl, in particular 2-ethylhexyl or 2-propylheptyl; and
n
is an integer in the range of 0 to 10, in particular in the range of 0 to 6.

## Description

The present invention relates to surfactant combinations comprising an anionic component A selected from C₁₀-C₁₄ alkyl benzenesulfonates and a non-ionic surfactant component B.

Agrochemical active compounds, such as herbicides, fungicides, insecticides, safeners and the like, and also pesticide adjuvants, are typically applied as aqueous dilutions to the locus of the pest to be controlled.

For reasons of ease of handling and application safety, agrochemical active compounds as well as pesticide adjuvants are usually marketed in the form of agrochemical formulations containing one or more agrochemical active compounds and/or adjuvants. Examples of agrochemical formulations that can be diluted with water include liquid formulations, such as emulsifiable concentrates (EC), oil dispersions (OD), aqueous emulsions (EW), mini emulsions (ME), suspo-emulsions (SE), aqueous suspension concentrates (SC), capsule suspensions (CS) and soluble liquids (SL), and solid formulations, such as dispersible granulates (DG), wettable granules (WG), dispersible powders (DP) and wettable powders (WP). These formulations must be designed in such a way that they can be easily diluted with water to the desired application concentration and ensure uniform distribution of the active ingredient in the aqueous application form. When diluted with water, the formulations must also not lead to severe foaming or creaming. Furthermore, the aqueous dilutions should remain stable against settling or creaming of the agricultural active compounds to avoid clogging of the spraying equipment and inaccurate dosing of the agrochemical active compounds.

Surface-active substances, hereinafter also referred to as surfactants, play a pivotal role in agrochemical formulations. On the one hand, they should ensure the rapid and uniform distribution of the ingredients of the agrochemical formulation in the aqueous application form, in particular, if the ingredients are not readily miscible with water. On the other hand, surfactants are required in liquid multiphase formulations, such as SC, OD, EW, SE and ME formulations, to stabilize the phases against coalescence, aggregation or coagulation, respectively, of the disperse phase, and, in case of OD and SC formulations, also against particle size growth of the dispersed solid phase. In some cases, surfactants even act as adjuvants, i. e. they increase the activity of the respective pesticide compound.

Surfactants used in agrochemical formulations may be anionic, non-ionic and cationic. They may be polymeric, i.e. they have molecular weights of 600 g/mol or higher, e.g. up to 10,000 g/mol (number average), or non-polymeric, i.e. they have molecular weights of lower than 600 g/mol, e.g. in the range of 200 to < 600 (number average).

It is well established that surfactants act by lowering the surface tension. For this, the surfactant must tend to migrate to the interface rather than remaining in solution in the liquid bulk phase. To this end, it must have hydrophilic and lipophilic groups. On the other hand, a too high a solubility in either one of the phases will impair its efficacy. Furthermore, the surfactant must be capable of forming a condensed film at the interface, either on its own or in combination with other surfactants to stabilize the disperse phase against coalescence, aggregation or coagulation. Moreover, the surfactant must migrate to and adsorb on the interface fast enough to ensure that the interfacial tension is lowered sufficiently while the emulsion is formed.

Frequently, combinations of one or more anionic surfactants and one or more non-ionic surfactants are used in agrochemical formulations to achieve the desired stability and dilution properties.

It is apparent from the foregoing that the molecular structure and molecular weight of the surfactant typically governs its suitability for a particular type of formulation. Various concepts have been established that allow some prediction of whether a particular surfactant is suitable for a particular formulation type, the most prominent being Griffin's hydrophilic-lipophilic balance (HLB) concept. However, the correlation between the chemical structure and their emulsifying activity are complex and difficult to predict, especially with surfactant combinations.

Calcium alkyl benzene sulfonates, i.e. the calcium salts of alkylbenzene sulfonic acids, such as calcium dodecylbenzene sulfonate, hereinafter referred to as COBS or CaDBS, are widely used surfactants for stabilizing oil-in-water emulsions (o/wemulsions). Due to the hydrophobic nature of these substances, CaDBS for example has an HLB value of about 7, they can be dissolved in the oil phase of the aforementioned formulations. Moreover, calcium salts of alkylbenzene sulfonic acids are known to provide low interfacial tension and they readily accumulate on the surface of the oil droplets formed upon dilution of the formulations with water. This promotes spontaneous emulsification and stabilization of the resulting emulsion. Therefore, calcium salts of alkylbenzene sulfonic acids are frequently used as surfactants in agrochemical formulations containing an oil component, i.e. in emulsifiable concentrates (EC), aqueous emulsions (EW), microemulsions (ME) and oil dispersions (OD). Since CaDBS is a solid, it is often offered as liquid formulation in an organic solvent for ease of handling.

For example, US 2004/0063583 discloses emulsifiable concentrates of pyrethoridetype insecticides containing calcium dodecyl sulfonate, a hydrophilic non-ionic surfactant of the group of polyoxyethylene polyaryl ethers and polyoxyethylene-copolyoxypropylene polyarylethers, a benzylester solvent such as benzylacetate and a hydrocarbon solvent.

WO 2007/095163 discloses an emulsifier system comprising 25 to 80% by weight of a hydrophobic anionic surfactant, such as calcium dodecylbenzene sulfonate, and 20 to 75% by weight of a hydrophilic surfactant having an HLB in the range of 11-18.

One disadvantage of using calcium salts of alkylbenzene sulfonic acids, such as CaDBS, for stabilizing aqueous emulsions is the sensitivity of the aqueous emulsions to conditions of high salinity and also of high alkalinity. Under these conditions, the emulsions may become instable and coalescence of the oil droplets may occur. Therefore, these surfactants are not suitable for stabilization of aqueous emulsions under conditions of high salinity or high alkalinity, in particular under conditions of high concentrations of alkali metal ions in the aqueous phase, which may occur when the formulations contain inorganic buffering salts and/or anionic pesticide compounds or when the formulation is tank mixed with said buffer salts or anionic pesticides. Moreover, calcium salts of alkylbenzene sulfonic acids are not particularly suitable for stabilizing multiphase formulations, in particular aqueous multiphase formulations, containing dispersed solids, such as SC and SE formulations.

Therefore, it is an object of the present invention to provide surfactants with a performance similar to that of CaDBS regarding the formation of aqueous emulsions by spontaneous emulsification of oil containing agrochemical formulations and the stabilization of aqueous emulsions. Furthermore, the surfactants should be less sensitive to saline or alkaline conditions. Moreover, the surfactants should be capable of stabilizing formulations containing dispersed solids, such as SC formulations and suspo-emulsions, which cannot be adequately stabilized by calcium salts of alkylbenzene sulfonic acids.

It was surprisingly found that the above needs are met by surfactant combinations as disclosed herein, comprising an anionic component A, hereinafter surfactant component A, which is selected from sodium C₁₀-C₁₄ alkyl benzenesulfonates, and a non-ionic component B selected from branched alkanols, branched alkanol ethoxylates and mixtures thereof, which are of the formula (I) as disclosed herein.

Therefore, the present invention relates to surfactant combinations as disclosed herein, comprising
a) an anionic component A, hereinafter surfactant component A, which is selected from sodium C₁₀-C₁₄ alkyl benzenesulfonates, in particular from sodium C₁₁-C₁₃ alkyl benzenesulfonates and especially from sodium dodecylbenzene sulfonates and
b) a nonionic component B, hereinafter surfactant component B, which is selected from compounds of the formula (I) and mixtures thereof

   R-O-(CH₂CH₂-O)ₙ-H (I)

   wherein
   - R: is branched C₈-C₁₀ alkyl, in particular 2-ethylhexyl or 2-propylheptyl; and
   - n: is an integer in the range of 0 to 10, in particular in the range of 0 to 6.

The surfactant combinations of the present invention are associated with several benefits. In particular, they exhibit a similar or even better emulsification performance than the corresponding calcium alkylbenzene sulfonates while being less sensitive to saline or alkaline conditions frequently met in agrochemical formulations or during application of agrochemical formulations. In particular, they have a high solubilization capacity, which is higher than expected from the known solubilization capacities of the corresponding sodium C₁₀-C₁₄ alkyl benzenesulfonates and component (B) when used alone. Moreover, they promote self-emulsification of water-immiscible liquids better than the corresponding sodium C₁₀-C₁₄ alkyl benzenesulfonates. Compared to calcium alkylbenzene sulfonates, the surfactant combinations of the present invention provide increased stabilization of solid organic particles in aqueous suspensions against agglomeration, sedimentation and particle growth. Furthermore, the combination of the components A and B have a lower Krafft temperature than the corresponding sodium C₁₀-C₁₄ alkyl benzenesulfonates and the corresponding calcium C₁₀-C₁₄ alkyl benzenesulfonates alone. Thus, aqueous emulsions and suspensions containing the surfactant combinations of the present invention are less sensitive to cold temperatures. Moreover, the surfactant combinations of the present invention show reduced foaming during emulsification compared to the corresponding sodium C₁₀-C₁₄ alkyl benzenesulfonates and the corresponding calcium C₁₀-C₁₄ alkyl benzenesulfonates.

As a result, the surfactant combinations of the present invention are particularly useful for stabilizing not only aqueous emulsions but also aqueous suspensions. Due to their properties, they are particularly useful as surfactants in agrochemical formulations. Therefore, the present invention also relate to following aspects:
- The use of the surfactant combinations as described herein as a surfactant in agrochemical formulations;
- The use of a surfactant combinations as described herein for the stabilization of aqueous dilutions of agrochemical formulations and/or for promoting the dilution of agrochemical formulations in water.
- The use of a surfactant combination as described herein for the stabilization of aqueous agrochemical multiphase formulations.

In yet a further aspect, the present invention relates to agrochemical formulations, in particular to liquid agrochemical formulations, comprising
i. a surfactant combination as disclosed herein, and
ii. at least one agrochemical compound selected from pesticide compounds, pesticide safeners and mixtures thereof.

In yet a further aspect, the present invention relates to aqueous spray liquor containing
i. a surfactant combination as disclosed herein;
ii. at least one agrochemical compound selected from pesticide compounds, pesticide safeners and mixtures thereof;
iii. water.

Here and in the following, the term "water-immiscible" is understood as the respective water-immiscible compound having a solubility in deionized water at 20°C and 1 bar of less than 10 g/L, in particular less than 5 g/L or less than 1 g/L. Likewise, the term "water-insoluble" is understood as the respective water-insoluble compound having a solubility in deionized water at 20°C and 1 bar of less than 10 g/L, in particular less than 5 g/L or less than 1 g/L.

Here and in the following, the term "alkyl" refers to a linear or branched saturated hydrocarbon group. In the context of alkyl, the term Cₖ-Cₘ alkyl refers to a group of alkyl groups having k to m carbon atoms, i. e. to alkyl radicals of the formula CₚH2ₚ₊₁, where p is an integer in the range spanned by the specified integers k and m.

According to the invention, the compound of formula (I) comprises a branched aliphatic group R selected from branched alkyl group having 8 to 10 carbon atoms. In the preferred branched alkyl groups the oxygen atom bound to R is bound to a CH₂ group. In particular, the branched alkyl groups R are selected from those, which are branched at the carbon atom adjacent to the CH₂ group bearing the O-(CH₂CH₂-O)ₙ-H moiety. Examples of R include but are not limited to 6-methylheptyl, 2-methylheptyl, 2-ethylhexyl, 2,2-dimethylhexyl, 2,2,4-dimethylpentyl, 7-methyloctyl, 2-methyloctyl, 2-methyldecyl and 2-propylheptyl. In particular, R is 2-ethylhexyl or 2-propylheptyl.

The component B may be an individual compound of the formula (I) or may be a mixture of compounds of the formula (I). In particular, the component B is a mixture of compounds of formula (I). In these mixtures, the compounds of formula (I) preferably have the same group R but differ from each other by the value of n.

In particular, the component B comprises a compound of formula (I) where n is 0 in an amount of at least 5% by weight, in particular at least 10% by weight, based on the total weight of the component B.

Preferably, the component B comprises a compound of formula (I) where n is 0 in an amount of at least 5% by weight, in particular at least 10% by weight, based on the total weight of the component B. Preferably, the total amount of the compound of formula (I) where n is 0 does not exceed 70% by weight, in particular 50% by weight, especially 40% by weight, based on the total weight of the component B.

In particular, the component B is a mixture of compounds of the formula (I) comprising a compound of formula (I), where n is 0, hereinafter compound I₀ and at least one further compound of formula (I) where n is in the range of 1 to 10, in particular in the range of 1 to 6, hereinafter compound I_{n≠0}. Preferably, the component B is a mixture comprising 5 to 70% by weight, in particular 10 to 50% by weight, especially 10 to 30% by weight, of the compound I₀ and 30 to 95% by weight, in particular, 50 to 90% by weight, especially 60 to 90% by weight of the compound(s) I_{n≠0}., based in each case on the total weight of the component B.

The composition of the invention further contains an anionic component A, which is selected from sodium C₁₀-C₁₄ alkyl benzenesulfonates, in particular from sodium C₁₁-C₁₃ alkyl benzenesulfonates and especially is sodium dodecyl benzenesulfonate. The C₁₀-C₁₄ alkyl group may be linear or branched and is preferably a linear C₁₀-C₁₄ alkyl group, in particular a linear C₁₁-C₁₃ alkyl group, especially a linear C₁₂ alkyl group. In the context of C₁₀-C₁₄ alkyl benzenesulfonates the linear C₁₀-C₁₄ alkyl group can be described by the formula R'

CH(R^{a})(R^{b}) (R')

where R^{a} is (CH₂)ₒH and is R^{b} is (CH₂)ₚCH₃
where o is an integer in the range of 0 to 12, in particular in the range of 0 to 10 and p is an integer in the range of 1 to 13 and where o+p is in the range of 9 to 13, in particular in the range of 10 to 12 and especially 11.

The C₁₀-C₁₄ alkyl group of the sodium C₁₀-C₁₄ alkyl benzenesulfonates is preferably located in the para-position of the benzene ring with respect to the sulfonate group. Therefore, particularly preferred sodium C₁₀-C₁₄ alkyl benzenesulfonates can be described by the following formula A' 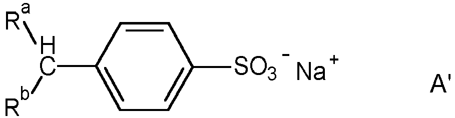 where R^{a} and R^{b} are as defined above and where o+p are in particular in the range of 10 to 12 and especially 12.

In the surfactant combinations of the present invention the weight ratio of the anionic component A to the non-anionic component B is typically in the range of 10:1 to 1:10, in particular in the range of 5:1 to 1:2, especially in the range of 4:1 to 1:1.

Preferably, the combinations of the components A and B have a low Krafft point at a temperature close to 0°C, e. g. in the range of 0 to 5 °C, as determined by DIN EN 13955:2003-03. The Krafft point is a narrow temperature range above which a turbid solution of a surfactant becomes clear.

The capability of the surfactant combinations of the present invention to emulsify large amounts of water-immiscible liquids, in particular solvents such as hydrocarbons, plant oils and mixtures thereof is manifested in particular by the fact that they form Winsor type IV microemulsions in 1:1 water/decane mixtures after homogenization at 20°C.

The classification of liquid formulations containing oil, water and surfactants as four Winsor systems I-IV was proposed by P. A. Winsor, Trans. Farady Soc. 44 (1948) 376-398 (see also M. Hloucha, "Microemulsions" in Ullmann's Encyclopedia of Industrial Chemistry 2015 - https://doi.org/10.1002/14356007). A precondition for this classification is that the formulations are in their equilibrium state, which means that macroemulsions are demixed. Winsor type I systems are two separated phases consisting of an oil phase and a water phase containing the dissolved surfactants. Winsor type II systems consist of an oil phase with dissolved surfactants and a water phase. Winsor type III systems consist of three phases: i) A middle phase with oil, surfactants and water; ii) water excess phase; iii) oil excess phase. Winsor type IV systems consist of one phase of oil, water, and surfactants.

The surfactant combinations of the present invention may be combined with one or more further non-ionic surfactants having an HLB according to Griffin of at least 12, e.g. in the range of 12 to 18, in particular in the range of 13 to 18 or 14 to 18. These combinations are particularly suitable for producing stable aqueous emulsions, microemulsions, or nanoemulsions with various organic water-immiscible solvents-and pesticide compounds.

If present, the weight ratio of the total amount of further non-ionic surfactants and the surfactant combination of the present invention in the range of 1:10 to 10:1, in particular in the range of 1:5 to 5:1.

Suitable non-ionic surfactants having an HLB according to Griffin of at least 12, e.g. in the range of 12 to 18, in particular in the range of 13 to 18 and especially in the range of 14 to 18, include, ethoxylated sorbitan monoesters with C₁₀-C₂₀ fatty acids having a degree of ethoxylation of at least 20, e. g. in the range of 20 to 50, C₈-C₁₀-alkylpolyglucosides, ethoxylated C₈-C₂₀ alkanols having a degree of ethoxylation of 11 to 50, ethoxylated plant oil having a degree of ethoxylation of at least 20, e. g. in the range of 20 to 50, and ethoxylated C₄-C1₆-alkylphenols having a degree of ethoxylation in the range of 11 to 50. Particular preference is given to ethoxylated C₈-C₂₀ alkanols having a degree of ethoxylation of 11 to 50, ethoxylated plant oil having a degree of ethoxylation of at least 20, e. g. in the range of 20 to 50, with even more preference given to the latter.

A particularly preferred group of non-ionic surfactants having an HLB according to Griffin of at least 12, e. g. in the range of 12 to 18, in particular in the range of 13 to 18 and especially in the range of 14 to 18, are ethoxylated plant oil having a degree of ethoxylation of at least 20, e. g. in the range of 20 to 50, which are in particular selected from the group of ethoxylated castor oils and ethoxylated soybean oils. These surfactants are commercially available as the following brands: Agnique CSO-16 to CSO-40, Agnique SBO 30, Emulpon CO-360, Ethox CO-16, Berol 904, Alkamuls OR 36, DEHSCOFIX CO 70, DEHSCOFIX CO 105, ENVIOMET EM 1036, ENVIOMET EM 1054, TOXIMUL 8242, TERGITOL ECO-36, NOVEL EL-40.

As mentioned before, the surfactant combination is suitable as a surfactant in agricultural formulations and for stabilization of aqueous emulsions and suspensions. For this, the surfactant combination can be combined prior the intended use, e. g. by component A and the component B as two separate components into the respective composition, e. g. into the agrochemical formulation.

However, for most purposes it is beneficial to provide the composition in the form of a co-formulation containing both the component A and the component B. In this regard, it is a particular advantage of the present invention that the component A is highly soluble in the component B. Therefore, the composition of the present invention can be provided as a concentrate co-formulation of the components A and B, i. e. as a co-formulation containing both components A and B, wherein the total amount of the component A and the component B is in particular at least 80% by weight, especially at least 90% by weight, based on the total weight of the co-formulation. In addition to the component A and component B, the concentrate co-formulation may contain additional ingredients, such as water, organic solvents or stabilizers. The amount of such additional ingredients is usually not higher than 20% by weight, based on the total weight of the co-formulation, and is typically not higher 10% by weight or 5% by weight. However, no solvents are required and the total amount of the total amount of the component A and the component B in the co-formulation may be as high as 100% by weight and is in particular at least 95% by weight or at least 98% by weight, based on the total weight of the co-formulation.

In the co-formulation, the relative amount of the component A and the component B is typically in the range of 10:1 to 1:10, in particular in the range of 5:1 to 1:2, especially in the range of 4:1 to 1:1.

In particular, the co-formulation contains
- 9 to 90% by weight, in particular 33 to 84% by weight and especially 50 to 80% by weight, based on the total weight of the composition, of the component A and
- 9 to 90% by weight, in particular 16 to 67% by weight and especially 20 to 50% by weight, based on the total weight of the composition, of the component B.

The co-formulation is typically liquid at 20°C. It typically has a viscosity at 20°C of not more than 11000 mPas, e. g. in the range of 6000 to 10500 mPas, determined by Brookfield Viscometer DV2T-LV.

As mentioned before, the surfactant combinations according to the present invention are suitable as surfactants in agrochemical formulations, in particular as surfactants in liquid agrochemical formulations. The surfactant combinations promotes the dilution of the agrochemical formulation in water and stabilizes the dilution, in particular against settling of solid matter contained in the agrochemical formulation and against coalescence of any water-insoluble liquid components contained in the agrochemical formulation. At the same time, the surfactant combination of the present invention reduce foam formation when the agrochemical formulations are diluted with water to the desired application concentration.

To this end, the surfactant combinations of the present invention are particularly suitable as surfactants in liquid agrochemical formulations containing a water-immiscible liquid component or an essentially water-insoluble component. Therefore, the surfactant combination of the present invention is particularly suitable as surfactants in agrochemical formulations which are selected from the group consisting of emulsifiable concentrates (EC), aqueous emulsions (EW), aqueous suspo-emulsions (SE), micro-emulsions (ME), aqueous suspension concentrates (SC) and oil dispersions (OD).

According to a preferred group of embodiments, the liquid agrochemical formulations contain a water-immiscible liquid component which must be emulsified in water prior to its application. Therefore, the surfactant combination of the present invention are particularly suitable as surfactants in agrochemical formulations which are selected from the group consisting of emulsifiable concentrates (EC), aqueous emulsions (EW), aqueous suspo-emulsions (SE), micro-emulsions (ME) and oil dispersions (OD).

According to a further preferred group of embodiments, the liquid agrochemical formulation is a liquid multiphase aqueous formulation wherein the phases must be stabilized against coalescence or aggregation. Therefore, the surfactant combination of the present invention are also particularly suitable as surfactants in agrochemical formulations which are selected from the group consisting of aqueous emulsions (EW), aqueous suspo-emulsions (SE), micro-emulsions (ME) and aqueous suspension concentrates.

The agrochemical formulations contain the surfactant combination of the present invention typically in an amount in the range of 0.5 to 20% by weight, in particular in an amount in the range of 1 to 10% by weight, based on the weight of the agricultural formulation. Within these ranges, a skilled person can easily find out the amounts required for optimal stabilization of the formulation as well as for optimal stabilization of the dilution obtained by diluting the respective agrochemical formulation in water to the desired application concentration.

Besides the surfactant combination of the present invention, the agrochemical formulation contains at least one agrochemical compound. The agrochemical compounds are not particularly limited and include pesticide compounds, pesticide safener compounds and pesticide adjuvants. Typically, the agrochemical compounds have a limited water-solubility in deionized water of not more than 50 g/L at 20°C and 1 bar and are typically water-immiscible or water-insoluble as defined herein.

Pesticide compounds, include in particular organic compounds from the group of herbicides, fungicides, insecticides, acaricides, molluscicides, plant growth regulators and desiccants.

Suitable fungicides are e.g. fungicides of the classes dinitroanilines, allylamines, anilinopyrimidines, antibiotics, aromatic hydrocarbons, benzenesulfonamides, benzimidazoles, benzisothiazoles, benzophenones, benzothiadiazoles, benzotriazines, benzylcarbamates, carbamates, carboxamides, carboxylic acid amides, chloronitriles, cyanoacetamide oximes, cyanoimidazoles, cyclopropanecarboxamides, dicarboximides, dihydrodioxazines, dinitrophenylcrotonates, dithiocarbamates, dithiolanes, ethylphosphonates, ethylaminothiazolecarboxamides, guanidines, hydroxy-(2-amino)pyrimi¬dines, hydroxyanilides, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenyl¬pyrroles, phenylureas, , phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines and triazoles.

Suitable insecticides are, e.g. insecticides from the class of carbamates, phenylpyrazoles, pyrethroids, neonicotinoids, spinosins, avermectins, milbemycins, juvenile hormone analogs, nereistoxin analogs, benzoylureas, diacylhydrazines, METI acaricides, and insecticides such as chloropicrin, pymetrozine, flonicamid, clofentezine, hexythiazox, etoxazole, diafenthiuron, propargite, tetradifon, chlorfenapyr, DNOC, buprofezin, cyromazine, amitraz, hydramethylnon, acequinocyl, fluacrypyrim, rotenone or derivatives thereof.

Suitable are e.g. herbicides of the classes of acetamides, amides, aryloxyphenoxypropionates, benzamides, benzofuran, benzoic acids, benzothiadiazinones, bipyridylium, carba¬mates, chloroacetamides, cyclohexanediones, dinitroanilines, dinitrophenol, diphenyl ethers, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphoroamidates, phosphorodithioates, phthalamates, pyrazoles, pyridazino¬nes, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils or ureas. Particular examples of herbicide compounds which are suitable to be formulated in formulations of of the present invention are saflufenacil, pendimethalin, atrazine, S-metolachlor, 2,4-D ester, isoxaflutole, indaziflam, diflufenzopyr, clomazone, sulfentrazone, pyroxasulam, dimethenamid-P, cinmethylin, pyroxasulfone, topramezone, mesotrione, pinoxaden, mesosulfuron, acetochlor, clethodim, propoxycarbazone, propisochlor, bentazone, clomazone, metazachlor, flumioxazin, fomesafen, aclonifen and diflufenican.

Pesticide safeners are organic compounds which reduce or prevent phytotoxic effects the pesticides may have. Examples of safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

The concentration of the agrochemical compound in the agrochemical formulation typically depends from the type of agrochemical compound and the formulation type and may be in the range of 0.1 to 70% by weight, in particular in the range of 1 to 50% by weight, based on the total weight of the agrochemical formulation.

In addition to the surfactant combination of the present invention, the agrochemical compound, selected from pesticide compounds and pesticide safeners, the agrochemical formulation of the present invention may contain one or more further nonionic surfactants, which are different from the compounds of formula (I). In particular, the further non-ionic are selected from non-ionic surfactants having an HLB according to Griffin of at least 12, e.g. in the range of 12 to 18, in particular in the range of 13 to 18 or 14 to 18 as described above. In particular these further non-ionic surfactants are selected from ethoxylated sorbitan monoesters with C₁₀-C₂₀ fatty acids having a degree of ethoxylation of at least 20, e. g. in the range of 20 to 50, C₈-C₁₀-alkylpolyglucosides, ethoxylated C₈-C₂₀ alkanols having a degree of ethoxylation of 11 to 50, ethoxylated plant oil having a degree of ethoxylation of at least 20, e. g. in the range of 20 to 50, and ethoxylated C₄-C1₆-alkylphenols having a degree of ethoxylation in the range of 11 to 50. Particular preference is given to ethoxylated C₈-C₂₀ alkanols having a degree of ethoxylation of 11 to 50, ethoxylated plant oil having a degree of ethoxylation of at least 20, e.g. in the range of 20 to 50, with even more preference given to the latter. Especially said further non-ionic surfactant contained in the formulation is selected from ethoxylated plant oil having a degree of ethoxylation of at least 20, e.g. in the range of 20 to 50, which are in particular selected from the group of ethoxylated castor oils and ethoxylated soybean oils.

The concentration of the further non-ionic surfactant in the agrochemical formulation typically depends on the type of agrochemical compound and the formulation type and may be in the range of 0 to 20% by weight, in particular 0 to 10% by weight, e. g. 0.1 to 20% by weight, in particular in the range of 0.5 to 10% by weight, based on the total weight of the agrochemical formulation.

In addition to the surfactant combination of the present invention, the agrochemical compound, selected from pesticide compounds and pesticide safeners, and the optional further non-ionic surfactant, the agrochemical formulation of the present invention may contain one or more liquid carriers, Suitable liquid carriers are water and organic solvents, including water-immiscible organic solvents such as
- mineral oil fractions of medium to high boiling point, e.g. kerosene, diesel oil;
- aliphatic, cyclic and aromatic hydrocarbons, e. g. toluene, paraffin,
- oils of vegetable or animal origin, such as sunflower oil, canola oil, soybean oil and mixtures thereof;
- fatty acid C₁-C₄ alkyl esters, in particular methyl and ethyl esters, in particular esters derived from plant oils;
- fatty acid amides, in particular fatty acid dimethylamides, in particular derived from plant oils;
- tetrahydronaphthalene, alkylated naphthalenes;
- benzylesters, such as benzyl acetate;

water miscible organic solvents, such as
   - C₂-C₅ alcohols, e.g. ethanol, propanol, butanol, benzylalcohol, cyclohexanol;
   - glycols, such as ethylene glycol, propylene glycol; and
   - aprotic polar solvents, such as DMSO, ketones, e.g. cyclohexanone; alkyl lactates, cyclic carbonates, gamma-butyrolactone; amines; amides, e.g. N-methylpyrrolidone, fatty acid dimethylamides;;
and mixtures thereof.

Depending on the formulation type, the amount of the liquid carrier may be in the range of 10 to 99% by weight, in particular in the range of 15 to 98% by weight, based on the total weight of the agrochemical formulation.

The agrochemical formulations of the present invention may additionally contain one or more further auxiliaries, such as thickeners, bactericides, anti-freezing agents (in case of aqueous formulations), anti-fomaing agents, colorants and tackifiers.

Suitable thickeners are, for example, polysaccharides, such as xanthan gum, carboxymethylcellulose, inorganic clays, which may be organically modified or unmodified, polycarboxylates, and inorganic silicates, such as fumed silica or colloidal silica. Suitable bactericides are, for example, bronopol and isothiazolinone derivatives such as alkylisothiazolinones and benzisothiazolinones. Suitable anti-freezing agents are, for example, ethylene glycol, propylene glycol, urea and glycerin. Suitable antifoaming agents are, for example, silicones, long chain alcohols, and salts of fatty acids. Suitable colorants (e.g. in red, blue, or green) are, for example, pigments of low water solubility and water-soluble dyes. Examples of inorganic pigments are iron oxide, titan oxide, iron hexacyanoferrate. Organic colorants include e.g. alizarin-, azo- and phthalocyanine colorants. Suitable tackifiers or binders are, for example, polyvinylpyrrolidons, polyvinylacetates, polyvinyl alcohols, polyacrylates, biological or synthetic waxes, and cellulose ethers.

For example, a typical emulsifiable concentrate of the present invention may contain 1 to 70 wt% of at least one pesticide compound or a combination of at least one pesticide compound and a pesticide safener, 1 to 10 wt% of a surfactant combination of the present invention and optionally 1 to 10 wt% of a castor oil ethoxylate, where all component are dissolved in a water-immiscible organic solvent, such as an aromatic hydrocarbon, a plant oil or a mixture thereof where the amount of solvent and the other ingredients add to 100 wt%. Dilution of 1 part by weight of the emulsifiable concentrate with 100 parts by weight of water gives a stable emulsion.

For example, a typical aqueous emulsion of the present invention may contain 5 to 40 wt% of at least one pesticide compound or a combination of at least one pesticide compound and a pesticide safener, 1 to 10 wt% of a surfactant combination of the present invention and optionally 1 to 10 wt% of a castor oil ethoxylate dissolved in 20 to 40 wt% of a water-immiscible organic solvent, such as an aromatic hydrocarbon, a plant oil or a mixture thereof. This mixture is introduced into water ad 100 wt% by means of an emulsifying machine and made into a homogeneous emulsion. Dilution of 1 part by weight of the resulting aqueous emulsion with 100 parts by weight of water gives a stable emulsion.

For example, a typical aqueous suspension concentrate (SC) of the present invention may contain 5 to 60 wt% of at least one pesticide compound or a combination of at least one pesticide compound and a pesticide safener in the form of particles having an average diameter, as determined by dynamic light scattering in the range of 0.5 to 6 µm, 0.5 to 20 wt%, 0.1 to 2 wt% thickener, e.g. xanthan gum or a phyllosilicate, and water ad 100 wt%. For SC formulations intended for seed treatment, i. e. so called FS type formulations, up to 40 wt% binder, e.g. polyvinylalcohol, may be included into the formulation. Dilution of 1 part by weight of the aqueous suspension concentrate with 100 parts by weight of water gives a stable aqueous suspension.

A suspo-emulsion of the present invention may be obtained by mixing an aqueous suspension concentrate with an aqueous emulsion or with an emulsifiable concentrate as described herein.

A typical microemulsion of the present invention may contain 1 to 30 wt% of at least one pesticide compound or a combination of at least one pesticide compound and a pesticide safener, 5 to 30 wt% organic solvent blend, e.g. fatty acid dimethylamide and cyclohexanone, 10 to 25 wt% surfactant blend comprising a 1:1 combination of a surfactant composition of the present invention, and water add to 100 %. This mixture is stirred for 1 h to produce spontaneously a thermodynamically stable microemulsion.

A typical oil dispersion (OD) of the present invention may contain 1 to 20 wt% of at least one pesticide compound or a combination of at least one pesticide compound and a pesticide safener, 50 to 80 wt% organic solvent blend, e.g. fatty acid dimethylamide and fatty acid methyl ester, 5 to 25 wt% surfactant blend comprising a combination of a surfactant composition of the present invention and optionally a co-surfactant. This mixture produces stable dispersions.

The pesticide formulations of the present invention can be prepared by conventional procedures and typically include a mixing of the ingredients of the formulation and optionally a milling step and/or one or more homogenization steps.

The formulations of the present invention are typically applied as aqueous dilutions to the target organism or the ground where the target organism may occur or to its habitat. For this, the formulations are applied in a customary manner, e. g. from a predosage device, a knapsack sprayer, a spray tank, a spray plane, or an irrigation system. Usually, the formulation is made up with water, buffer, and/or further auxiliaries, such as adjuvants, to the desired application concentration and the ready-to-use spray liquor or the formulation according to the invention is thus obtained. Usually, 20 to 2000 liters, preferably 50 to 400 liters, of the ready-to-use spray liquor are applied per hectare of agricultural useful area.

The formulations of the present invention may be co-applied with pesticide adjuvants are compounds, which have a neglectable or even no pesticidal activity themselves, and which improve the biological performance of the respective pesticide compound on the target organisms. Examples are surfactants, mineral or vegetable oils, and combinations thereof with non-ionic surfactants, such as fatty alcohol-alkoxylates. Further examples are listed by Knowles, Adjuvants and additives, Agrow Reports DS256, T&F Informa UK, 2006, chapter 5.

The invention is further illustrated by the following examples.

The following abbreviations are used:

| | |
|---|---|
| 2EH: | 2-ethylhexanol |
| 2PH: | 2-propylheptanol; |
| NaDBS | Sodium salt of linear dodecylbenzene sulfonate; |
| CaDBS | Calcium salt of linear dodecylbenzene sulfonate |
| wt% | % by weight. |

The following compounds where used:
- Sodium n-dodecyl sulfate, solid powder, purity > 98% by weight;
- A 55% wt% aqueous solution of the sodium salt of linear dodecylbenzene sulfonate;
- 60 wt% of the calcium salt of linear dodecylbenzene sulfonate in 2-ethylhexanol, (e. g. Ninate^{®} 60E of Stepan Company);
- 2-decanol, purity > 98%;
- 2-propylheptanol, purity > 98%;
- Deionized water;
- Heptane, analytical grade;
- Decane, analytical grade;
- Compound (I) mixture: Compound of formula (I) with R = 2-propylhepty, where the number average of n is 3, containing about 21% by weight of the compound (I), where n = 0.

### General procedure

In a glass vial, the respective surfactant or surfactant combination was mixed with a 1:1 mixture (v/v) of water and heptane or with a 1:1 mixture (v/v) of water and decane and homogenized at 25°C by means of a vortex mixer, until the mixture was homogeneous. Then the mixture was set aside for 2 weeks at 25°C. Then, the resulting emulsion was assessed with regard to phase separation and classified by its Winsor type.

### Comparative example 1:

5 wt% sodium dodecyl sulfate and 1.5% 2PH were mixed with water/heptane 1:1 w/w according to the general procedure. Phase separation was observed, no microemulsion formed.

### Comparative example 2:

5 wt% sodium dodecyl sulfate and 2.5% 2PH were mixed with water/heptane 1:1 w/w according to the general procedure. Phase separation was observed, no microemulsion formed.

### Comparative example 3:

10 wt% of a 55 wt% solution of NaDBS in water was mixed with water/decane 1:1w/w according to the general procedure. A clear middle phase was not formed, i.e., no bicontinuous microemulsions.

### Reference example, commercial Ca-DDBS/2EH mixture:

2.5 wt% of a 60 wt% solution of CaDBS in 2EH and 5 wt% urea were mixed with water/decane 1:1w/w according to the general procedure. A Winsor Type III system formed.

### Inventive example 1:

10 wt% of a 55 wt% solution of NaDBS in water and 10 wt% of compound (I) mixture were mixed with water/decane 1:1w/w according to the general procedure. A Winsor Type IV system formed.

### Inventive example 2:

10 wt% of a 55 wt% solution of NaDBS in water and 4 wt% of compound (I) mixture were mixed with water/decane 1:1w/w according to the general procedure. A Winsor Type IV system formed.

### Inventive example 3:

10 wt% of a 55 wt% solution of NaDBS in water and 3 wt% of compound (I) mixture were mixed with water/decane 1:1w/w according to the general procedure. A Winsor Type IV system formed.

### Inventive example 4:

10 wt% of a 55 wt% solution of NaDBS in water and 2 wt% 2-decanol were mixed with water/decane 1:1w/w according to the general procedure. A Winsor Type III, near Type IV region, formed. Microemulsion solubilization capacity increased compared to 10 wt% aqueous NaDBS with not decanol.

### Inventive example 5:

0.12 wt% of NaDBS, 0.08 wt% compound (I) mixture, 0.2 wt% castor oil ethoxylate 25 mole EO, 0.6 wt% solvent and 99 wt% water were mixed according to the general procedure. Transparent emulsion, Winsor Type IV system formed.

## Claims

1. A surfactant combination comprising
a) an anionic component A, which is selected from sodium C₁₀-C₁₄ alkyl benzenesulfonates and
b) a no-nionic component B, which is selected from compounds of the formula (I) and mixtures thereof
R-O-(CH₂CH₂-O)ₙ-H] (I)
wherein
R is a branched C₈-C₁₀ alkyl; and
n is an integer in the range of 0 to 10, in particular in the range of 0 to 6.

2. The surfactant combination of claim 1, where R is 2-ethylhexyl or 2-propylheptyl.

3. The surfactant combination of any one of the preceding claims, wherein the component B comprises at least 5% by weight, in particular at least 10% by weight, based on the weight of the component B, of a compound of the formula (I), where n is 0.

4. The surfactant combination of any one of the preceding claims, wherein the component B is a mixture of compounds of the formula (I), comprising a compound of formula (I), where n is 0 and at least one further compound of formula (I) where n is in the range of 1 to 10, in particular in the range of 1 to 6.

5. The surfactant combination of any one of the preceding claims, wherein the weight ratio of the anionic component A to the non anionic component B is in the range of 10:1 to 1:10, in particular in the range of 5:1 to 1:2.

6. The surfactant combination of any one of the preceding claims, wherein the component A is linear sodium dodecyl benzene sulfonate.

7. A surfactant combination of any one of the preceding claims, which is a concentrate co-formulation of the component A and the component B, wherein the total amount of the component A and the component B is at least 80% by weight.

8. The use of a surfactant combination according to any one of claims 1 to 7 as a surfactant in agrochemical formulations.

9. The use of a surfactant combination according to any one of claims 1 to 7 for stabilization of an aqueous dilution of an agrochemical formulation and/or for promoting the dilution of an agrochemical formulation in water.

10. The use of a surfactant combination according to any one of claims 1 to 7 for stabilizing an aqueous agrochemical multiphase formulation.

11. The use of any one of claims 8 to 10, where the agrochemical formulation is a liquid formulation, in particular an emulsifiable concentrate (EC), an aqueous emulsion (EW), an aqueous suspo-emulsion (SE), a micro-emulsion (ME), an aqueous suspension concentrate (SC) or an oil dispersion (OD).

12. An agrochemical formulation comprising
i. a surfactant combination according to any one of claims 1 to 7 and
ii. at least one agrochemical compound selected from pesticide compounds, pesticide safeners and mixtures thereof.

13. The agrochemical formulation of claim 12, which is a liquid formulation, in particular an emulsifiable concentrate (EC), an aqueous emulsion (EW), a microemulsion (ME), an aqueous suspo-emulsion (SE), an aqueous suspension concentrate (SC) or an oil-dispersion (OD).

14. The agrochemical formulation of any one of claims 12 or 13, which contains the surfactant combination in an amount in the range of 0.5 to 20% by weight, in particular in an amount in the range of 1 to 10% by weight, based on the weight of the agricultural formulation.

15. The use of any one of claim 8 to 11 or the agrochemical formulation of any one of claims 12 to 14, where the agrochemical formulation contains a further non-ionic surfactant having an HLB according to Griffin of at least 12, which is in particular an ethoxylated C₈-C₂₀ alkanol having a degree of ethoxylation of 12 to 50 or an ethoxylated plant oil having a degree of ethoxylation of at least 20.

16. An aqueous spray liquor comprising
i. a surfactant combination according to any one of claims 1 to 7;
ii. at least one agrochemical compound selected from pesticide compounds, pesticide safeners and mixtures thereof; and
iii. water.
